Europäisches Patentamt

European Patent Office

Office européen des brevets

(19)

(11) Numéro de publication: **0 183 632 B1**

# (12) FASCICULE DE BREVET EUROPEEN

(45) Date de publication de fascicule du brevet:
**20.03.91**

(51) Int. Cl.⁵: **B60P 3/08**

(21) Numéro de dépôt: **85440067.8**

(22) Date de dépôt: **15.11.85**

(54) **Véhicule porte-voitures à structures porteuses transversales individuelles.**

(30) Priorité: **15.11.84 FR 8417574**

(43) Date de publication de la demande:
**04.06.86 Bulletin 86/23**

(45) Mention de la délivrance du brevet:
**20.03.91 Bulletin 91/12**

(84) Etats contractants désignés:
**AT BE CH DE GB IT LI LU NL SE**

(56) Documents cités:
**DE-A- 2 456 292**
**FR-A- 2 391 091**
**US-A- 3 895 587**

(73) Titulaire: **LOHR INDUSTRIE**
**29, rue du 14 Juillet**
**F-67980 Hangenbieten(FR)**

(72) Inventeur: **Andre, Jean-Luc**
**3, rue de Schaffhouse**
**F-67000 - Strasbourg(FR)**
Inventeur: **Fity, Christian**
**14, Quai de l'Ill**
**F-67400 - Illkirch Graffenstaden(FR)**

(74) Mandataire: **Metz, Paul**
**Cabinet METZ PATNI 95, rue de la Ganzau**
**F-67100 Strasbourg(FR)**

## Description

La présente invention se rapporte à un véhicule porte-voitures à structures porteuses transversales individuelles propres à chaque train de roues laissant libre le dessous des véhicules transportés en vue de bénéficier de l'espace supplémentaire résultant de l'absence de plateaux et d'un niveau inférieur mobile permettant l'accès et la prédisposition des véhicules au chargement. Un tel véhicule, présentant les caractéristiques définies dans le préambule de la revendication l'est connu par ex.de DE-A-2456292. Dans le souci d'exploiter au mieux le volume disponible dans le sens de la hauteur, les inventeurs ont imaginé des structures adaptées, destinées à se dispenser des plateaux-porteurs supérieurs dans les convois porte-véhicules.

La présente invention concerne un porte-véhicules de ce type dans lequel les plateaux supérieurs ont été remplacés par des structures porteuses transversales individuelles propres à chaque train de roues permettant de gagner le maximum de hauteur, en supprimant l'épaisseur du châssis porteur formant les plateaux supérieurs et en rendant utilisable la hauteur correspondant à la garde au sol des véhicules des niveaux supérieurs

Les avantages immédiats s'avèrent déjà nombreux :

. Possibilité d'accepter et de transporter dans de bonnes conditions des véhicules supplémentaires dans les principaux gabarits routiers existants.

. Possibilité de mieux adapter la capacité totale aux disparités de chargement. Facilité et rapidité des manipulations et des manoeuvres des véhicules à transporter.

. Sécurité améliorée tant pour le personnel que pour les voitures : plan de travail à niveau plus bas qui supprime le travail en hauteur.

. Le roulage, le chargement et le déchargement s'effectuent toujours à un niveau bas, près du sol.

. Les voitures sont plus accessibles en cours de chargement.

. Certaines opérations peuvent s'effectuer directement au sol.

. Rentabilité accrue des trajets.

On connaît déjà des structures de soutien d'un véhicule par ses roues tel les que celles décrites dans 1e brevet allemand n° 2 456 292 au nom de Mr. BEHRENS.

Selon cette invention, des structures porteuses formées de deux supports de roues à écartement variable sont montées mobiles le long de poteaux verticaux. Les supports de roues se trouvent disposés selon un même alignement longitudinal . Leur intervalle est réalisé modifiable par des structures à emboîtement permettant le rapprochement ou l'éloignement des supports de roues le long de la branche portée par le poteau. Chaque véhicule est soutenu par deux structures homologues indépendantes disposées en regard.

Ce type de soutien par deux supports indépendants propres à chaque voie de roues disposées d'un même côté ne peut donner satisfaction en raison des difficultés de manipulation imposées par un tel système mais aussi en raison de nombreux inconvénients dont on décrira ci-après plusieurs d'entre eux.

S'agissant de supports indépendants pour un même train de roues, la stabilité latérale n'est pas assurée. De plus, la mise à même niveau des deux lignes de roues relève d'ajustements successifs.

On ne distingue par ailleurs aucune adaptation au diamètre des roues.

De plus, le type de réglage en écartement utilisé pour les supports de roues utilisant l'emmanchement de tubes se trouve vite limité par la résistance mécanique de tels assemblages et n'autorise donc qu'un faible débattement.

Ainsi, un tel système ne permet pas d'assurer une sécurité suffisante et sa mise en oeuvre entraîne des difficultés de manipulation supplémentaires dont le personnel affecté à ces opérations se passerait bien.

La présente invention a pour objet un véhicule qui ne présente pas les inconvénients ci-dessus. Ce but est atteint grâce aux caractéristiques définies dans la partie caractérisante de la revendication 1.

En plus des principaux avantages mentionnés ci-dessus, on peut noter les avantages supplémentaires suivants :

. Ensemble universel acceptant toutes les variations de voie des véhicules.

. Maintien suffisant sans contrainte supplémentaire par encastrement partiel des roues évitant ainsi le calage traditionnel.

. Possibilité de monter simplement et facilement sur les structures transversales des moyens d'arrimage tels que tourets de brêlage, supports et cliquets de sangles.

Les caractéristiques techniques et d'autres avantages sont consignés dans la description qui suit, effectuée sur un mode d'exécution de l'invention en référence au dessin accompagnant dans lequel :

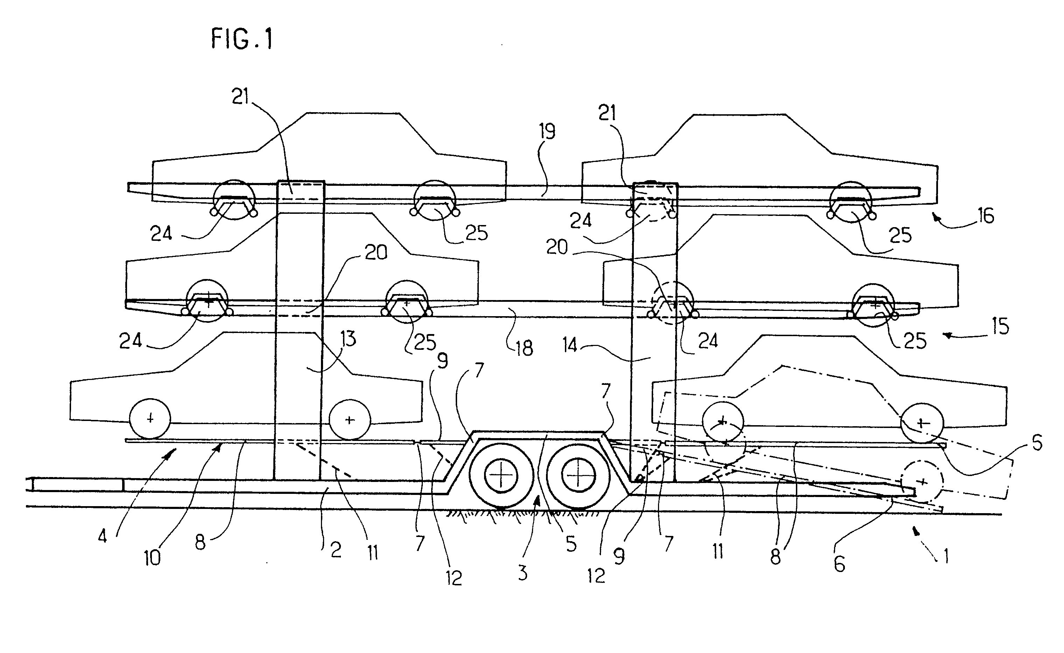

. La figure 1 est une vue générale en élévation d'un exemple de véhicules porte-voitures équipés de niveaux porteurs selon trois étages.

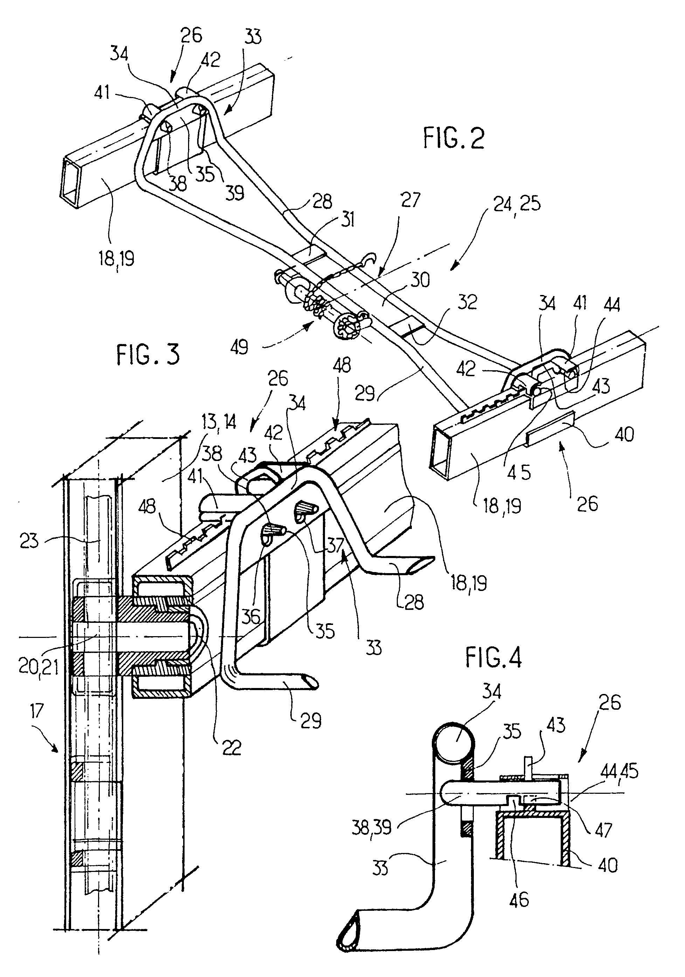

. La figure 2 est une vue en perspective d'un exemple de structure transversale porteuse, déplaçable en une seule pièce et son dispositif de brêlage.

. La figure 3 est une vue mixte en coupe et en perspective de la liaison entre un poteau, le longeron adjacent et l'extrémité d'une structure transversale porteuse.

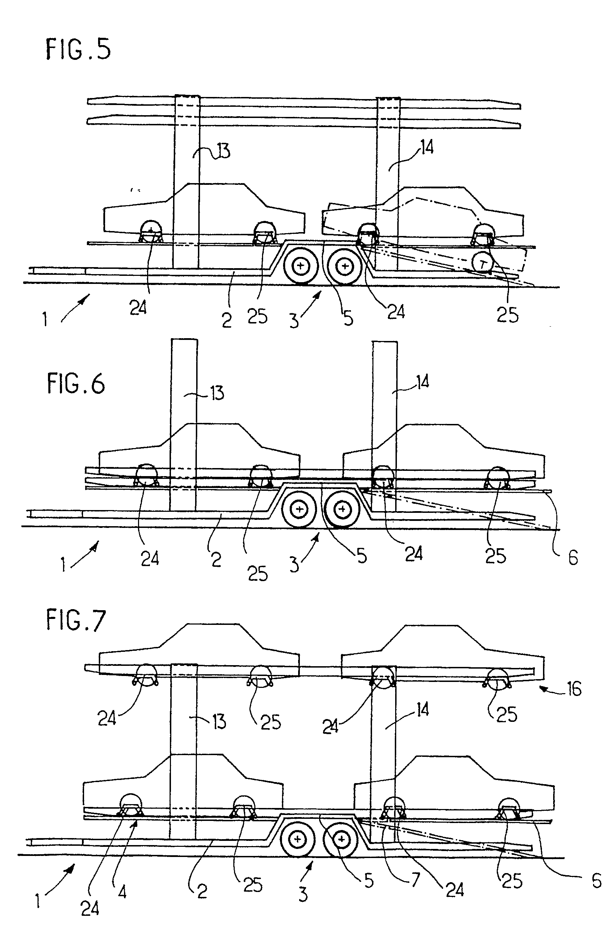

. La figure 4 est une vue schématique en coupe du mécanisme de verrouillage.

. Les figures de 5 à 9 sont des vues en plan de schémas simplifiés illustrant les principales phases de fonctionnement du véhicule porte-voiture selon l'invention :

- figure 5 :    montée sur plan de chargement et chargement longerons relevés ;

- figure 6 :    plan de chargement chargé selon un premier niveau, longerons porteurs sur Le plan de chargement ;

- figure 7 :    niveau supérieur en position haute, plan de chargement chargé ;

- figure 8 :    niveau supérieur en position haute, niveau intermédiaire relevé en position haute, dernier chargement du plan de chargement ;

- figure 9 :    chargement terminé, niveaux supérieurs et intermédiaires en position normale, plan de chargement confondu avec le châssis de la remorque.

On a représenté sur les dessins une remorque I porte-voitures. Il est bien entendu que l'invention s'applique à différents types de véhicules porte-voitures, notamment camions, semi-remorques, garages, gardiennages, parkings et autres.

La remorque 1 comprend un châssis 2 monté sur un train de roues 3.

Le niveau inférieur de la remorque forme le plan de chargement 4. Il est composé d'une combinaison de plateaux permettant l'accès au camion et à la remorque directement du sol ou à partir d'un quai et la prédisposition des véhicules pour le chargement des niveaux supérieurs.

Ce niveau inférieur est composé de trois parties principales articulées entre elles selon des articulations à pivotement par exemple du type à charnière :

. une partie centrale fixe ou plateau milieu 5 disposée directement au-dessus du train de roues 3 ;

. une partie arrière formant le niveau inférieur arrière 6 articulée en 7 à l'arrière du plateau milieu 5 composée de deux plateaux 8 et 9 reliés entre eux selon la même articulation charnière 7.

. une partie avant formant le niveau inférieur avant 10 articulée à l'avant du plateau milieu 5 composée des deux mêmes plateaux 8 et 9 reliés entre eux par la même articulation charnière 7.

Le niveau inférieur arrière 6 assure le maintien en position basse des véhicules en configuration de transport, le plateau 8 étant en position horizontale au-dessus du sol, à un niveau inférieur à celui du plateau milieu 5 et le plateau 9 étant en position inclinée à l'arrière du train de roues 3.

Sous l'effet des vérins, 11 et 12 prenant appui sur le châssis 2, et agissant d'une part sur le plateau incliné 9 et d'autre part sur le plateau 8, le niveau inférieur arrière 6 peut prendre une position inclinée dans laquelle les plateaux 8 et 9 sont en alignement et l'extrémité arrière du plateau 8 est en contact avec le sol Cette configuration permet l'accès des véhicules directement du sol sur le plan de chargement.

Sous l'effet des mêmes vérins 11 et 12, le dernier véhicule placé sur le plan de chargement peut être, d'une part élevé de la position inclinée à la position dans le prolongement du plateau inférieur milieu 5 pour prédisposer le véhicule au chargement des niveaux supérieurs et d'autre part descendre en position basse pour atteindre la configuration de transport.

Le niveau inférieur avant 10 assure le maintien en position basse des véhicules en configuration de transport, le plateau 8 étant en position horizontale au-dessus du sol à un niveau inférieur au niveau du plateau inférieur milieu 5, le plateau 9 étant en position inclinée à l'avant du train de roues 3.

Sous l'effet des vérins 11 et 12 prenant appui sur le châssis 2 et agissant d'une part sur le plateau incliné 9 et d'autre part sur le plateau 8, le niveau inférieur avant 10 peut prendre une position en prolongement du plateau milieu 5 dans laquelle les plateaux 8 et 9 sont alignés. De plus, sous l'action des mêmes vérins, il est possible de placer l'avant du plateau 8 à une hauteur appropriée pour permettre l'accès au véhicule tracteur.

Sous l'action des mêmes vérins, la voiture placée sur le plan de chargement peut-être descendue par le niveau inférieur avant 10 en position basse correspondant à la configuration de transport.

Le châssis de remorque possède, de part et d'autre des roues des poteaux avant 13 et arrière 14 se répétant sur le côté longitudinal opposé.

Ces poteaux soutiennent deux niveaux porteurs, respectivement intermédiaire 15 et supérieur 16. Ils renferment les mécanismes de levage tels que 17 propres à chaque niveau, tels que vis, vérins, câbles, chaînes ou tout autre moyen approprié accouplés pour un même portique.

Les niveaux porteurs 15 et 16 sont formés chacun de deux longerons extérieurs 18 et 19 présentant chacun un point de liaison 20 et 21 avec le poteau- adjacent 13 et 14 par exemple selon un axe de pivotement 22 tel que représenté en figure 3 se déplaçant verticalement le long d 'une colonne 23 à l'intérieur du poteau sous l'effet de la poussée d'un vérin de levage.

Sur ces longerons sont montées à coulissement ou à roulement, continu ou à crans, des structures transversales porteuses tel les que 24 et 25 au nombre de deux par véhicule.

Ces structures transversales porteuses sont déplaçables et immobilisables à un emplacement quelconque le long des longerons 18 et 19 pour former, par les positions de deux successives d'entre elles, un intervalle vide correspondant à l'empattement de chaque voiture à transporter.

Ces structures se composent, dans leur variante de base, de la façon suivante.

Les longerons sont réunis par un corps 27 formé de deux éléments tubulaires 28 et 29 disposés côte à côte, réunis entre eux en partie médiane 30 par des entretoises 31 et 32. Les extrémités des éléments 28 et 29 divergent légèrement de la partie médiane 30 vers les longerons, pour garantir un meilleur maintien des roues, en principe de plus grand diamètre sur les voitures plus larges.

L'écartement progressif de ces éléments tubulaires 28 et 29 correspond aux meilleures conditions moyennes de maintien selon les disparités de dimensions de voies et de diamètres de roues des voitures courantes. Les éléments tubulaires 28 et 29 sont réunis entre eux en extrémité par une boucle de maintien telle que 33 remontant à angle droit par rapport au plan de jonction déterminé par les deux éléments tubulaires 28 et 29. La partie supérieure 34 horizontale de la boucle de maintien et ses arrondis sont rigidifiés par une platine-support 35 par laquelle les extrémités des structures transversales porteuses 18 et 19 sont reliées au dispositif de verrouillage 26. Chaque platine-support 35 comporte des passages 36 et 37 légèrement oblongs dans le sens vertical, traversés par des doigts de retenue 38 et 39 rétractables de forme générale cylindrique à extrémité légèrement conique.

Les structures transversales porteuses 24 et 25 présentent une hauteur suffisante pour que les passages 36 et 37 se trouvent au niveau des doigts de verrouillage 38 et 39 lorsqu'elles reposent sur le plan de chargement, les longerons 18 ou 19 étant en position basse. Ces doigts font partie du dispositif de verrouillage décrit ci-après en référence aux figures 2, 3 et 4.

Les dispositifs de verrouillage 26 coulissent le long des longerons 18 et 19. Leur corps 40 affecte la forme générale d'un manchon monté à glissement ou à roulement sur les longerons. Le corps 40 présente en partie supérieure deux logements cylindriques parallèles 41 et 42 dans lesquels sont montés mobiles les doigts de retenue 38 et 39 solidaires d'une poi gnée de manoeuvre 43 en retrait mobile le long d'ouvertures 44 et 45 prévues le long des logements 41 et 42.

Les doigts 38 et 39 de forme cylindrique à extrémité légèrement conique présentent un évidement transversal 46 en relation avec les dents 47 d'une crémaillère 48 montée coulissante le long des longerons 18 et 19 pour solidariser la structure transversale porteuse 24 ou 25 au dispositif de verrouillage 26 et simultanément, le verrouillage longitudinal des dispositifs 26 sur les longerons extérieurs 18 et 19, les doigts 38 et 39 venant s'encastrer entre les dents 47 de la crémaillère 48 tel que représenté en figure 4.

La position rentrée des doigts 38 et 39 permet de désolidariser la structure transversale porteuse 24 ou 25 des dispositifs 26 et par l'intermédiaire de leur évidement transversal 46 de libérer le dispositif 26 des crémaillères 48. La structure peut alors coulisser librement le long des longerons 18 ou 19.

Les structures transversales porteuses 24 ou permettent la fixation en partie médiane, de dispositifs d'arrimage tels que 49 , tourets de brêlage, treuils ou autres.

Les structures transversales porteuses tel les que 24 et 25 viennent reposer sur le plan de chargement 4 lorsque les niveaux 15 et 16 sont en position basse. Dans cette position les longerons sont en superposition au-dessus du niveau de chargement. Cette configuration impose de disposer les structures transversales porteuses 24 et 25 à des profondeurs différentes pour le niveau 15 et le niveau 16. Toutefois, il est possible d'utiliser des structures transversales identiques pour les deux niveaux.

Pour le niveau intermédiaire 15 les dispositifs de verrouillage 26 sont montés sur les longerons 18 et 19 par les doigts de retenue 38 et 39 disposés sur la face supérieure des longerons

Pour le niveau supérieur 16, les dispositifs de verrouillage 26 sont montés sur les longerons 18 et 19 par les doigts de retenue 38, 39 disposés sur la face inférieure des longerons. Cette configuration permet, lors de la superposition des longerons porteurs en position basse, en appui sur le plan de chargement, de placer les doigts de retenue des deux niveaux dans un même plan horizontal parallèle au plan de chargement, ainsi les structures transversales porteuses 24 et 25 des deux niveaux peuvent être identiques et reposer simultanément sur le plan de chargement 4.

On décrira ci-après les principales phases de fonctionnement du porte-véhicule selon l' invention en se référant aux figures de 5 à 9.

En début de chargement le véhicule porte-voiture se trouve dans la situation suivante. Le plan de chargement 4 est en position haute dite "à quai" ou en position inclinée pour un chargement direct à partir du sol. Les longerons 18 et 19 des niveaux porteurs intermédiaire et supérieur sont en position haute. On dispose le premier groupe de structures transversales aux emplacements prédéterminés correspondant exactement aux trains de roues et aux empattements des véhiculess à charger, en fonction du programme de chargement. On effectue la montée d'une première série sur le plan de chargement (figure 5). Les véhicules sont amenés et arrêtés exactement à l'endroit précis où leurs pneus s' inscrivent dans l'intervalle entre les deux éléments tubulaires des structures transversales porteuses préalablement mises en place avec précision.

On abaisse simultanément les deux longerons 18 et 19 qui se trouvent alors en position superposée sur le plan de chargement (figure 6). On verrouille les extrémités des structures transversales porteuses en engageant les doigts de retenue 38 et 39 dans les passages des platines-support 35.

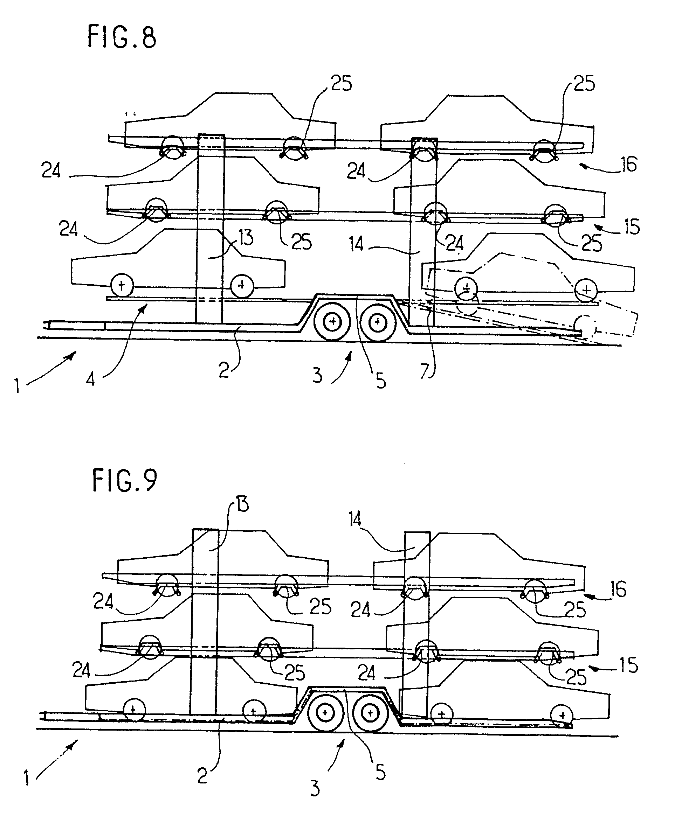

On lève le niveau supérieur de son chargement de voitures pour le monter en position haute extrême déterminée par la longueur des poteaux (figure 7). On arrime si nécessaire par brêlage ou sanglage en travaillant sous les voitures à un niveau intermédiaire présentant les sécurités nécessaires.

On procède ensuite de la même façon au chargement d'une deuxième série de voitures destinée à former le niveau intermédiaire en disposant et en verrouillant les structures porteuses aux emplacements appropriés déterminés par le programme de chargement.

On lève ce deuxième chargement au-dessus de la hauteur normale de roulage pour permettre le chargement du dernier groupe sur le plan de chargement disposé en élévation pendant toute cette phase de chargement. Sur ce plan, les voitures sont immobilisées de façon classique.

On abaisse ensuite le plan de chargement 4 qui se partage de chaque côté du train de roues en une rampe et un plateau-porteur à l'aide des vérins adaptés.

Les voitures du niveau inférieur sont disposées au niveau le plus bas. On abaisse ensuite successivement le niveau intermédiaire 15 et le niveau supérieur 16 jusqu'à encastrement du pavillon des voitures du niveau précédent dans le dessous des châssis des voitures du niveau abaissé en prenant soin de respecter un intervalle de sécurité nécessaire aux mouvements des suspensions consécutifs aux cahots sur la route.

Les caractéristiques du porte-véhicules selon l'invention permettent de superposer les voitures à des distances minimales les unes des autres, permettant ainsi d'entrer avec trois niveaux de charge dans la majorité des gabarits routiers imposés par les législations nationales.

## Revendications

1. Véhicule porte-voitures à structures individuelles porteuses propres à chaque train de roues permettant de transporter trois niveaux de chargement distincts, véhicule dans lequel les niveaux de chargement intermédiaire (15) et supérieur (16) sont constitués par des longerons (18,19) s'étendant sur toute la longueur du châssis, et montés mobiles verticalement le long de poteaux de châssis (13,14), sur lesdits longerons (18,19) étant montées déplaçables au moins deux structures transversales porteuses permettant d'établir pour deux successives d'entre elles un intervalle vide correspondant à l'empattement de la voiture à supporter, intervalle utilisé pour loger l'extrémité du pavillon de la voiture du niveau inférieur et gagner ainsi la fraction de hauteur nécessaire pour faire entrer trois niveaux de voitures dans les gabarits routiers courants caractérisé en ce que les structures transversales porteuses (24,25) sont montées déplaçables individuellement sur toute la longueur des longerons (18,19), immobilisables en un endroit quelconque de ceux-ci, et formées chacune de deux éléments tubulaires disposés côte à côte, l'intervalle entre lesdits éléments tubulaires augmentant progressivement vers chaque extrémité des structures transversales porteuses de façon à former des logements dont l'ouverture varie le long desdites structures, logements dans lesquels viennent s'encastrer simultanément les roues d'un même train de roues, et en ce que le niveau inférieur (4), constituant le plan de charge pour les niveaux intermédiaire (15) et supérieur (16), sur lequel sont disposés initialement les longerons (18,19) appelés à constituer les niveaux intermédiaire (15) et supérieur (16), est formé de plateaux mobiles (8,9).

2. Véhicule porte-voitures selon la revendication 1 caractérisé en ce que chacun des logements d'extrémité est constitué par l'intervalle variable d'écartement de deux éléments tubulaires (28,29) convergents vers la partie centrale permettant de recevoir à immobilisation longitudinale et transversale les deux roues d'un même train de roues.

3. Véhicule porte-voitures selon les revendications 1 et 2, caractérisé en ce que les éléments tubulaires (28,29) sont réunis en extrémité par des boucles de maintien telles que (33) remontant à angle droit, leur procurant une forme générale en berceau, les éléments tubulaires étant disposés côte à côte et réunis entre eux en partie médiane par des entretoises (31,32).

4. Véhicule porte-voitures selon les revendications 1, 2 et 3 prises dans leur ensemble, caractérisé en ce que la partie supérieure (34) horizontale de chaque boucle de maintien (33) et ses arrondis sont rigidifiés par une platine-support (35) présentant des passages oblongs (36,37) coopérant avec un dispositif de verrouillage mobile (26).

5. Véhicule porte-voitures selon les revendications de 1 à 4 prises dans leur ensemble, caractérisé en ce que les structures transversales porteuses (24,25) sont supportées par des manchons (40) montés à glissement ou à roulement sur les longerons (18,19) dont les parties supérieures présentent deux logements cylindriques parallèles (41,42) dans lesquels sont montés mobiles des doigts de retenue (38,39) solidaires d'une poignée de manoeuvre, doigts traversant en position verrouillée les passages (36,37) prévus dans des platines d'extrémité (35) solidaires des extrémités des structures transversales porteuses.

6. Véhicule porte-voitures selon la revendication 4, caractérisé en ce que le dispositif de verrouillage (26) coopère avec une crémaillère (48) fixée coulissante sur chaque longeron, en vue d'une immobilisation en un endroit quelconque.

## Claims

1. Vehicle carrier comprising individual support structures for each set of wheels, enabling the load to be transported on three separate levels, in which vehicle the intermediate (15) and upper (16) loading levels consist of side members (18,19) which extend along the entire length of the chassis, and are mounted in a vertically moveable manner along the length of chassis posts (13,14), there being displaceably mounted on the said side members (18,19) at least two transverse support structures which enable an empty space, corresponding to the wheel base of the car to be supported, to be established between two successive structures, the space being used to accommodate the end of the roof of the car on the lower level and thus gaining the fraction of height necessary to load three levels of cars within conventional road gauges, characterized in that the transverse support structures (24,25) are mounted such that they are individually displaceable over the entire length of the side members (18,19) can be immobilised in any position thereof, and are each formed of two tubular elements placed side by side, the space between these tubular elements increasing progressively towards each end of the transverse support structures so as to form housings of which the opening varies along the said support structures, in which housings the wheels of one wheel-set can be embedded simultaneously; and in that the lower level (4), forming the loading level for the intermediate (15) and upper (16) levels, on which the side members (18,19) intended to constitute the intermediate (15) and upper (16) levels are initially disposed, is formed of movable plates (8,9).

2. Vehicle carrier according to claim 1, characterized in that each of the end housings consists of the variable spacing interval between two tubular elements (28,29] converging towards the central part enabling the two wheels of the same wheel-set to be accommodated in a manner such that they are longitudinally and transversely immobilized.

3. Vehicle carrier according to claims 1 and 2, characterised in that the tubular elements (28,29] are connected at the ends by retaining loops, such as (33], which extend at a right angle and produce an essentially cradle-shaped form, the tubular elements being disposed side by side and connected to one another in the medium section by struts (31,32).

4. Vehicle carrier according to claims 1, 2, and 3 taken as a whole, characterised in that the horizontal upper part (34) of each retaining loop (33) and the rounded parts thereof are stiffened by a support plate (35), which has elongate apertures (36,37) co-operating with a movable locking device (26).

5. Vehicle carrier according to claims 1 to 4 taken as a whole, characterized in that the transverse support structures (24,25) are supported by sleeves (40) which are mounted in a sliding or rolling manner on the side members (18,19) of which the upper parts have two cylindrical, parallel housings (41,42) in which there are mounted in a movable manner retaining fingers (38,39), which are integral with a manouevering handle, the fingers, in the locked position, passing through the passages (36,37) provided in the end plates (35) integral with the ends of the transverse support structures.

6. Vehicle carrier according to claim 4, characterised in that the locking device (26) co-operates with a rack attached in a sliding manner to each side member for immobilization in any position.

**Ansprüche**

1. Wagentransporter mit einzelnen Tragelementen, die jeweils einer Radachse zugeordnet sind und die es gestatten, drei verschiedene beladene Ebenen zu transportieren, wobei die mittlere Ladeebene (15) und die obere Ladeebene (16) Längsträger (18, 19) umfassen, die sich über die ganze Länge des Chassis erstrecken und die an Trägerpfosten (13, 14) vertikal verschiebbar montiert sind, wobei mindestens zwei transversale Tragelemente auf den besagten Längsträgern (18, 19) verschieblich angeordnet sind, die es erlauben jeweils für zwei einander zugeordnete zwischen sich einen Leerraum zu begrenzen, der dem Radstand eines zu tragenden Fahrzeugs entspricht, wobei dieser Raum benutzt wird, um das Oberteil der Karosserie des Fahrzeugs der Ebene, die sich unmittelbar darunter befindet, aufzunehmen und so den notwendigen Bruchteil an Höhe zu gewinnen, um drei Ladeebenen mit Fahrzeugen zu beladen mit gängingen Laderaumkapazitäten, **dadurch gekennzeichnet,** daß die transversalen Tragelemente (24, 25) einzeln auf der ganzen Länge der Längsträger (18, 19) verschieblich angeordnet und an jeder beliebigen Stelle von diesen feststellbar sind, daß sie jeweils aus zwei röhrenförmigen Elementen bestehen, die nebeneinanderliegend angeordnet sind, wobei sich der Zwischenraum zwischen den röhrenförmigen Elementen nach und nach zu jeder Seite der transversalen Tragelemente hin verbreitert, um Zwischenräume zu bilden, deren Öffnung sich entlang der besagten Elemente verändert, und in die sich gleichzeitig die Räder einer gemeinsamen Radachse einfügen, und daß die untere Ebene (4), die die Aufladeebene für die mittlere (15) und die obere (16) Ladeebene bildet und auf der zu Beginn die Längsträger (18, 19) angeordnet sind, die dazu dienen die mittlere (15) und die obere Ebene zu bilden, aus beweglichen Trageplatten (8, 9) besteht.

2. Wagentransporter nach Anspruch 1, dadurch gekennzeichnet, daß jeder der äußeren Zwischenräume aus einem veränderbaren Abstandsintervall von zwei röhrenförmigen Elementen (28, 29) besteht, die zum zentralen Abschnitt hin konvergent sind, und die die Aufnahme von zwei Rädern einer Radachse zu ihrer Längs- und Querverriegelung gestatten.

3. Wagentransporter nach Anspruch 1 und 2, dadurch gekennzeichnet, daß die röhrenförmigen Elemente (28, 29) an ihrem Ende durch Halteschlaufen (33) verbunden sind, die rechtwinklig nach oben abgebogen sind, und ihnen so die Gestalt einer Wiege geben, wobei die röhrenförmigen Elemente Seite an Seite angeordnet sind und im Mittelabschnitt durch Stege (31, 32) verbunden sind.

4. Wagentransporter nach den Ansprüchen 1, 2 und 3 in ihrer Gesamtheit, dadurch gekennzeichnet, daß der obere horizontale Abschnitt (34) jeder Halteschlaufe (33) und ihre Abrundungen durch eine Trägerplatte (35) versteift sind, die längliche Öffnungen (36, 37) aufweist, die mit einer beweglichen Verriegelung (26) zusammenwirken.

5. Wagentransporter nach den Ansprüchen 1 bis 4 in ihrer Gesamtheit, dadurch gekennzeichnet, daß die transversalen Tragelemente (24, 25) durch Schiebehülsen (40) getragen werden, die gleitend oder rollend auf den Längsträgern angeordnet sind, deren obere Abschnitte zwei parallele zylindrische Lager (41, 42) aufweisen, in denen Rückhaltefinger (38, 39) beweglich und verbunden mit einem Betätigungshandgriff angeordnet sind, wobei die Finger in Verriegelungsposition durch die Öffnungen (36, 37), die in den seitlichen Tragplatten (35) vorgesehen sind, hindurchragen, die mit den Endbereichen der transversalen Tragelemente verbunden sind.

6. Wagentransporter nach Anspruch 4, dadurch gekennzeichnet, daß die Verriegelungsvorrichtung (26) mit einer Zahnstange (48) zusammenwirkt, die beweglich auf jedem Längsträger angeordnet ist, um sie an jedem beliebigen Ort festzustellen.

FIG.1

EP 0 183 632 B1

FIG. 2

FIG. 3

FIG.4

FIG.5

FIG.6

FIG.7

FIG.8

FIG.9